# NEUE EUROPÄISCHE PATENTSCHRIFT

(11) **EP 0 748 419 B2**
(45) Veröffentlichungstag und Bekanntmachung des Hinweises auf die Entscheidung über den Einspruch: **11.09.2002**
(45) Hinweis auf die Patenterteilung: 04.11.1998
(21) Anmeldenummer: 95909780.9
(22) Anmeldetag: 24.02.1995
(51) Int. Cl.: F02N 5/04, F02N 11/04, H02K 41/025

(54) **ANLASSER FÜR ANTRIEBSAGGREGATE, INSBESONDERE VERBRENNUNGSMOTOREN**
STARTER FOR DRIVE ASSEMBLIES, MORE PARTICULARLY INTERNAL COMBUSTION ENGINES
DEMARREUR D'AGREGATS D'ENTRAINEMENT, NOTAMMENT DES MOTEURS A COMBUSTION INTERNE

(30) Priorität: 28.02.1994 DE 4406481
(43) Veröffentlichungstag der Anmeldung: 18.12.1996
(73) Patentinhaber: Continental ISAD Electronic Systems GmbH & Co. oHG, 86899 Landsberg/Lech (DE)
(72) Erfinder: MASBERG, Ullrich, D-51503 Rösrath (DE); ZEYEN, Klaus-Peter, D-50670 Köln (DE)
(74) Vertreter: Turi, Michael, Dipl.-Phys.
(86) Internationale Anmeldenummer: EP9500681
(87) Internationale Veröffentlichungsnummer: WO95023287

(56) Entgegenhaltungen:
- EP-A- 0 017 724
- EP-A- 0 033 191
- EP-A- 0 103 821
- EP-B- 0 706 462
- EP-B1- 0 151 935
- WO-A-90/01126
- DE-A- 2 917 139
- DE-A- 3 408 311
- FR-A- 2 102 400
- FR-A- 2 140 904
- FR-A- 2 707 702
- DE-Buch. W. Volkroth " Eine ganz andere DE-Buch. W. Volkroth " Eine ganz andere Technik", 1992, Edition Ergon, Absatz 9, Technik", 1992, Edition Ergon, Absatz 9, Seite 134-letzter Absatz und Seite 135 Seite 134-letzter Absatz und Seite 135

## Beschreibung

Die Erfindung befaßt sich mit einem Anlasser für Antriebsaggregate, insbesondere für Verbrennungsmotoren, nach dem Oberbegriff von Anspruch 1.

Viele Antriebsaggregate, z.B. Verbrennungsmotoren in Kraftfahrzeugen, können nicht aus eigener Kraft anlaufen. Sie müssen zunächst durch eine äußere Kraftquelle, den Anlasser, angeworfen und auf die zum Anspringen benötigte Motordrehzahl gebracht werden. Erst danach können sie aus eigener Kraft weiterlaufen. Dies erfordert je nach Motortyp, Hubvolumen, Lagerreibung, etc. ein unterschiedlich großes Anlaufdrehmoment, welches vom Anlasser aufgebracht werden muß. Dieser arbeitet gewöhnlich über ein Getriebe auf eine massive Schwungmasse oder ein Schwungrad, welche/welches auf einer Welle des Antriebsaggregates - bei Kraftfahrzeugen die Kurbelwelle - sitzt.

Bei Kraftfahrzeugen ist es bekannt, einen batteriegespeisten Gleichstrommotor als Anlasser zu verwenden, der das notwendige Drehmoment über ein Antriebsritzel auf das Schwungrad übersetzt. Meistens wird hierfür ein sog. Gleichstrom-Reihenschlußmotor eingesetzt, d.h. ein elektrischer Gleichstromotor, dessen Erreger- bzw. Statorwicklung in Reihe mit der Ankerwicklung geschaltet ist. Zum Anlassen wird das Antriebsritzel des Reihenschlußmotors - unter Einwirkung eines magnetschaltergesteuerten Einrückhebels - mit einem auf der Peripherie der Schwungradscheibe sitzenden Zahnkranz in Eingriff gebracht. Nach dem Anlassen wird diese Verbindung wieder unterbrochen. Häufig ist zusätzlich zwischen dem Anker des Reihenschlußmotors und dem Antriebsritzel eine Freilaufkupplung angeordnet, die als Überlastschutz ausgebildet ist. Sie soll verhindern, daß der Anker beim Anspringen des Verbrennungsmotors mit unerwünscht hoher Drehzahl angetrieben wird. Bei weiteren bekannten Anlassern ist für die mechanische Verbindung zwischen dem Anker des Reihenschlußmotors und dem Zahnkranz des Schwungrades ein aufwendiges Einspurgetriebe vorgesehen, welches das "Einspuren" des Ritzels in den Zahnkranz erleichtern soll.

Somit sind diese bekannten Anlasser ein ebenso aufwendiges wie reparaturanfälliges Bauteil. Auch das Schwungrad stellt ein aufwendiges Bauteil dar, da es an seinem äußeren Umfang mit dem Zahnkranz für den Eingriff des Anlasserritzels und im übrigen mit Markierungen zum Steuern der Zündvorgänge im Motor versehen ist.

Ein Anlasser der eingangs genannten Art ist z.B. in der EP 0 151 935 B1 im Zusammenhang mit einem Starter/Generator-Motor für einen Verbrennungsmotor eines Kraftfahrzeuges offenbart. Der Läufer der elektrischen Maschine sitzt unmittelbar auf der Kurbelwelle. Die Masse des Läufers wird zugleich als Schwungmasse beim Starten des Verbrennungsmotors verwendet.

Die EP 0 103 821 A2 beschreibt einen nach dem Reluktanz-Prinzip arbeitenden Starter/Generator-Motor, dessen Läufer ebenfalls als Schwungrad bzw. Schwungmasse eines Kraftfahrzeug-Verbrennungsmotors fungiert. Zwar ist dieser Reluktanzmotor zum Starten des Verbrennungsmotors geeignet, allerdings nur zum indirekten Starten durch Beschleunigung des vom Verbrennungmotor abkuppelbaren Läufers, welcher erst nach Erreichen einer ausreichenden Drehzahl zum Starten durch eine Zusatzkupplung eingekuppelt wird. Mit diesem System vergleichbar ist der aus der DE 29 17 139 A1 bekannte Starter-Generator. Der dort beschriebene indirekte Starter weist entweder einen seitlich angeordneten Reibrad-Motor oder alternativ dazu ein Schwungrad auf, das gleichzeitig als Läufer einer elektrischen Maschine ausgebildet ist. Das Anlaufmoment des Starters reicht jedoch auch hier nicht dazu aus, um den Verbrennungsmotor direkt zu starten.

Ferner ist auch bekannt, dem Schwungrad eines Antriebssystems einen geräuschmindernden Drehschwinungstilger zuzuordnen, um bereits an dieser Stelle Drehschwingungen zu bekämpfen. Hierzu wird beispielsweise auf die EP 0 250 913 A2, auf das DE 89 07 426.2 U 1 oder auf die EP 0 033 191 A2 hingewiesen.

Außerdem wird zum Stand der Technik auf folgende Druckschriften verwiesen: Die DE 34 08 211 A1 befaßt sich mit einer - auf einer Kurbelwelle eines Kolbenmotors sitzenden - elektrischen Maschine, wobei eine Schwungmasse auf einer Kurbelwelle sitzt und an ihrer Umfangsfläche mit einer Toroidwicklung bestückt ist. Grundsätzlich vergleichbar damit ist die elektrische Maschine nach DE 33 01 245 A1.

Auch die DE 37 37 192 A1 offenbart einen Anlasser in einem Kraftfahrzeug, dessen Läufer über eine erste Kupplung mit der Kurbelwelle einer Verbrennungsmaschine sowie über eine zweite Kupplung mit der Eingangswelle eines Getriebe kuppelbar ist und auch als Schwungmasse zum Antreiben der Kurbelwelle fungiert.

Die DE 21 23 831 B2 behandelt einen Linearmotor zum Starten einer Brennkraftmaschine, dessen Läufer starr mit einer Kurbelwelle der Brennkraftmaschine verbunden ist. Neben dem Läufer des Linearmotors ist jedoch zusätzlich eine Schwungscheibe zum Anwerfen der Brennkraftmaschine als seperates Bauelement mit der Kurbelwelle gekoppelt. Die DE 22 28 516 B2 ist ein Zusatzpatent zur DE 21 23 831 B2.

Schließlich behandelt die DE 23 16 679 B2 Linearmotoren für den Antrieb schienengebundener Fahrzeuge; und aus der DE 40 27 706 ist ferner ein berührungsloser Elektroantrieb für radgebundene Fahrzeuge über einen Linearantrieb bekannt.

Die Erfindung zielt darauf ab, ein verbessertes Anlassersystem für Antriebsaggregate zur Verfügung zu stellen.

Die Erfindung erreicht dieses Ziel mit dem Gegenstand des Anspruches 1. Bevorzugte Ausführungen der Erfindung sind in den abhängigen Ansprüchen angegeben.

Elektromotoren nutzen das Prinzip der elektromagnetischen Induktion bzw. die Lorentz-Kraft aus. Ihnen liegt in der Regel folgendes Konstruktionsprinzip zugrunde: ein stationäres Grundelement (nachfolgend Ständer genannt) und ein bewegtes Grundelement (nachfolgend Läufer genannt) sind räumlich-körperlich durch einen Spalt, insbesondere Luftspalt, voneinander getrennt, jedoch über einen durch den Spalt tretenden gemeinsamen magnetischen Fluß miteinander verknüpft. Dabei erzeugt wenigstens ein Grundelement das magnetische Primärfeld, meistens mit Hilfe einer oder mehrerer Erregerwicklungen, z.B. als Wanderfeld im Falle eines Linearmotors. Das andere Grundelement ist mit einem oder mehreren elektrischen Leitern bestückt oder besteht aus solchen. Das Primärfeld des einen Grundelements durchsetzt über den Spalt das andere Grundelement und bewirkt durch Verknüpfung mit dem dort induzierten elektromagnetischen Feld eine antreibende Kraft, die Lorentz-Kraft. Für die Wirkungsweise des Elektromotors ist es grundsätzlich gleichgültig, ob die Erregerwicklungen auf dem stationären oder bewegten Grundelement, also dem Ständer oder dem Läufer, angeordnet sind.

Nach der vorliegenden Erfindung ist die Schwungmasse/das Schwungrad nunmehr gleich dem Läufer, also Teil des Anlassermotors selbst. Die Übertragung des Anlaufdrehmoments auf die Schwungmasse/das Schwungrad eines Antriebsaggregates findet somit über eine elektromagnetische Kopplung zwischen der/dem als Schwungmasse/Schwungrad ausgebildeten bewegten Läufer und dem stationären Ständer statt. Femer ist der Läufer selbst als passiver Drehschwingungstilger ausgebildet.

Durch die Erfindung ergeben sich - insbesondere beim Einsatz für Verbrennungsmotoren mit Schwungrädern, besonders bei Kraftfahrzeugen - mehrere Vorteile gleichzeitig: der erfindungsgemäße Anlasser zeichnet sich durch seine kompakte und einfache Bauweise aus. Er ist nämlich gewissermaßen "um den Läufer herum" konstruiert. Ferner bietet die Erfindung die Möglichkeit, den Anlasser- ohne aufwendige Konstruktionsmaßnahmen oder zusätzliche Bauelemente - auch zur Dämpfung von Störschwingungen im Kraftfahrzeug einzusetzen. Hierdurch werden das Gewicht und die Abmessungen im Motorbereich eines Kraftfahrzeuges entscheidend verringert. Der eingangs beschriebene, vom Kraftfahrzeug her bekannte Anlasser und dessen Übersetzungsgetriebe samt Antriebsritzel werden überflüssig. Außerdem entfällt der aufwendige Zahnkranz an der Schwungradmasse des Läufers, so daß die Schwungmasse des Läufers entsprechend einfacher und mit verringertem Herstellungsaufwand gefertigt werden kann. Als wichtiger Vorteil entfällt schließlich die bekannte mechanische "getriebemäßige" Übertragung des Anlaufmomentes auf die Schwungmasse des Läufers. Sie wird von einer durch den Spalt zwischen Läufer und Ständer greifenden magnetischen Kopplung ersetzt. Beim Startvorgang berühren sich somit keine Teile mehr, da das Drehmoment von elektromagnetischen Feldkräften aufgebracht wird. Außerdem sind, abgesehen vom Läufer, keine bewegten Teile mehr vorhanden. Der Anlasser unterliegt somit allenfalls einem geringen Verschleiß und - bedingt durch die integrierte Schwingungstilgung - einer verminderten Beanspruchung durch im Antriebsstrang des Kraftfahrzeuges auftretende Störschwingungen.

Für den Anlasser kommt grundsätzlich ein Elektromotor - gleichgültig ob Gleichstrom-, Wechselstromoder Drehstromotor - in Frage, der ein ausreichend großes Anlaufdrehmoment auf seinen Läufer, hier gleich der Schwungmasse oder dem Schwungrad des Antriebsaggregates, übertragen kann. Die Wahl des jeweiligen Elektromotors richtet sich nach der Art des Antriebaggregates. Für Verbrennungsmotoren sind dabei solche Typen besonders geeignet, die ein großes Anlaufdrehmoment aufbringen und eine ausreichend hohe Drehzahl erreichen. Überraschend vorteilhaft ist ein nach dem Linarprinzip arbeitender rotierender Elektromotor. Der Linearmotor kann prinzipiell als eine spezielle Form des Induktionsmotors mit Kurzschlußläufer, insbesondere Asynchronmotors, aufgefaßt werden. Anstelle des etwa von solchen Asynchronmotoren her bekannten Drehfeldes bilden die Erregerwicklungen des Linearmotors ein reines Wanderfeld aus. Das vom Ständer (oder Läufer) erzeugte Wanderfeld durchsetzt den Läufer (oder Ständer) und induziert darin Ring- bzw Wirbelströme, deren magnetische Felder mit dem Wanderfeld verkettet sind und im Ergebnis die gewünschte Schubkraft ausüben. Danach fungiert vorzugsweise der Läufer eines derartigen Linearmotors als Schwungrad bzw. Schwungmasse eines Antriebsaggregates. Die Übertragung des Anlaufdrehmoments auf das Schwungrad findet dann über eine elektromagnetische Kopplung zwischen dem als Schwungrad ausgebildeten bewegten Läufer und dem stationären Ständer des Linearmotors statt. Ein hoher Kopplungswirkungsgrad wird dann erreicht, wenn der Spalt zwischen Schwungrad und Ständer des Linearmotors möglichst klein ist, - vorzugsweise etwa 0,1 bis 1,5 mm beträgt. Als besondere Vorteile von Linearmotoren seien genannt: ihr einfacher und robuster Aufbau und ihre damit einhergehende Wartungsarmut, ihre einfache Regulierbarkeit und ihre große Beschleunigung im Anlauf (Schubkräfte bis zu 1000 N).

Bevorzugt sind die Erregerspulen auf dem Ständer (nachfolgend als Ständerspulen bezeichnet) nur an einer Seite des Schwungrades bzw. der Schwungmasse des Läufers angeordnet, vorzugsweise nur innerhalb eines bestimmten segmentartigen Winkelbereiches der Schwungmasse, der jedoch mit steigenden Anforderungen an das benötigte Anlaufdrehmoment ebenfalls wächst bis er den vollen Umfang, also 360° erreicht. Dabei können die Spulen gleich- oder ungleichmäßig auf der einen Seite der Schwungmasse verteilt sein. Alternativ und/oder ergänzend, insbesondere für ein erhöhtes Anlaufdrehmoment, können die Spulen auch zu beiden Seiten der Schwungmasse angeordnet sein. Das aus mehreren Ständerspulen bestehende Erregersystem kann also - ein- oder beidseitig - innerhalb bestimmter Winkelbereiche oder über den gesamten Umfang - gleich- oder ungleichmäßig - verteilt angeordnet sein. Hierdurch läßt sich der Linearmotor besonders einfach für unterschiedliche Leistungsbereiche auslegen.

Bevorzugt besteht das Schwungrad bzw. die Schwungmasse des Läufers i.w. aus einem gut leitenden Material, beispielsweise aus Eisen. Um die Leitfähigkeit weiter zu erhöhen, ist es vorzugsweise mit einem Material hoher Leitfähigkeit, etwa Kupfer, beschichtet oder belegt, - und zwar auf denjenigen Flächen, die i.w. paralell zur Spulenebene der Ständerspulen liegen. Hierdurch bauen die in der leitfähigen Schicht induzierten Wirbelströme ein Sekundärfeld auf, das - wie das Primärfeld - senkrecht zur Spaltebene liegt und somit einen optimalen Kopplungsgrad garantiert. Alternativ dazu sind kurzgeschlossene Läuferwicklungen in oder auf der Schwungmasse angeordnet, - wiederum derart, daß sich das Primärfeld und das Sekundärfeld optimal verketten.

Hierdurch wird eine erhebliche Steigerung der resultierenden Schubkraft erreicht. Die in die Schwungmasse induzierten Wirbelströme können sich in der hochleitenden Schicht oder den Läuferwicklungen ungestört ausbreiten, so daß das induzierte Magnetfeld entsprechend größer ist und zu einer verstärkten Wechselwirkung mit dem Erregerfeld führt. Untersuchungen an herkömmlichen Linearmotoren haben gezeigt, daß die resultierenden Schubkräfte annähernd proportional der elektrischen Leitfähigkeit des Materials der stromführenden Läuferschichten sind. Ferner werden hierdurch auch Wärmeverluste - sog. Wirbelstromverluste - in der Schwungmasse auf ein Minimum reduziert.

Fertigungstechnisch besonders günstig ist es, die Schwungmasse als kreisförmige Stahlscheibe auszubilden und außen auf den dem Spalt zugekehrten Flächen mit einem Kupferblech zu belegen.

Zur weiteren Steigerung der Schubkraft sind bei einer weiteren bevorzugten Ausgestaltung mit Strom beaufschlagte Läuferspulen in oder auf der Schwungmasse angeordnet, derart, daß deren Magnetfeld senkrecht zur Spaltebene steht.

Besonders bei großen Antriebsaggregaten, die ein großes Anlaufmoment zum Starten benötigen, ist es zweckmäßig, die Schwungmasse derart auszubilden, daß es im Radialschnitt einen T-förmigem Querschnitt aufweist.

In diesem Fall können z.B. stationäre Erregerspulen, welche das Primärfeld erzeugen, sowohl seitlich als auch radial außerhalb der Schwungmasse angeordnet sein, derart, daß die Erregerspulen den T-förmigen Endbereich der Schwungmasse "umgreifen" - ähnlich wie bei einer Hochgeschwindigkeit-Magnetschwebebahn. Auf diese Weise wird eine starke magnetische Kopplung zwischen Erregerspulen und Läufer bei gleichzeitig kompakter und robuster Bauweise erzielt.

Alternativ können die Erregerspulen auch in oder auf der Schwungmasse angeordnet und ein Material hoher Leitfähigkeit oder kurzgeschlossene Wicklungen auf dem Ständer angeordnet sein. Auf diese Weise werden die Funktionen von Läufer und Ständer hinsichtlich der Erzeugung von Primär-bzw. Erregerfeld und Sekundär- bzw. induziertem Feld gegenüber der zuvor beschriebenen Anordnung einfach vertauscht: Nunmehr erzeugen die Erregerspulen auf dem Läufer das Wanderfeld, welches im Ständer Wirbelströme induziert, um in Wechselwirkung mit dem Wanderfeld eine Schubkraft auf den Läufer auszuüben.

Diese Anordnung hat den Vorteil, daß sie flexibel auf die Abmessungen im Motorbereich eines Kraftfahrzeuges angepaßt werden kann. In Folge der Wanderbewegung des Wanderfeldes muß lediglich der Ständer oder die Läuferspulenanordnung den zurückzulegenden Weg überspannen. Folgende Ausführungen sind daher möglich: der Ständer kann sich konzentrisch um den gesamten Umfang ein- oder beidseitig der Schwungmasse erstrecken. Er bildet also einen Ring oder Doppelring. Gleichzeitig sind die Läuferspulen in oder auf der Schwungmasse lediglich in einem segmentartigen Abschnitt der Schwungmasse verteilt angeordnet. Alternativ dazu kann sich der Ständer nur über einen bestimmten Winkelbereich erstrecken und die zugeordneten Läuferspulen der Schwungmassenscheibe umspannen den vollen Umfang von 360°.

Wie bereits einleitend ausgeführt, kann bekanntlich jeder Elektromotor sowohl als Motor, als auch als Generator betrieben werden kann. Ob er als Motor oder als Generator arbeitet, ist stets nur eine Frage der Betriebsart.

Auch im vorliegenden Fall sind beide Betriebsarten möglich: Hierzu weist der erfindungsgemäße Anlasser Schaltmittel auf, welche den Elektromotor nach erfolgtem Start des Antriebsaggregates in den Generatorbetrieb umschalten - er also als Motor beim Starten und als Generator nach dem Starten betrieben wird.

Bei einem Kraftfahrzeug übernimmt der erfindungsgemäße Anlasser also nach dem Anwerfen des Verbrennungsmotors die Funktion der herkömmlichen Lichtmaschine und versorgt das Fahrzeug im Fahrbetrieb mit elektrischer Energie. Daher wird die Lichtmaschine, die bekanntlich aufwendig mittels Keil- oder Zahnriemen von der Kurbelwelle des Verbrennungsmotors angetrieben wird, überflüssig. Im Ergebnis wird durch die Erfindung für den Startvorgang und für die Stromversorgung des Kraftfahrzeuges nur ein einziges Bauteil benötigt. Dies bringt eine deutliche Kostenreduzierung mit sich.

Bei einer bevorzugten Variante der erfindungsgemäßen Starter-Generator-Schwingungstilger Kombination ist der als Schwungrad fungierende Läufer aus einem inneren Schwungring und einen konzentrisch hierzu angeordneten äußeren Schwungring aufgebaut, wobei die Schwungringe drehelastisch, insbesondere über eine Gummischicht, miteinander verbunden sind.

Besonders platzsparend ist eine weitere Variante des erfindungsgemäßen Anlassers, bei welcher der als Schwungrad fungierende Läufer gegenüber seiner Drehachse geneigt ausgebildet ist. Falls der Läufer (= Schwungrad) einem inneren Schwungring und einen hierzu drehelastisch angeordneten äußeren Schwungring aufweist, ist es zweckmäßig, daß der äußere Schwungring gegenüber dem inneren Schwungring geneigt angeordnet ist.

Weitere Vorteile und Ausgestaltungen der Erfindung ergeben sich aus der nachfolgenden Beschreibung bevorzugter Ausführungsbeispiele. In der Beschreibung wird auf die beigefügte schematische Zeichnung Bezug genommen. In der Zeichnung zeigen:
- Fig. 1: eine Seitenansicht auf ein bevozugtes Ausführungsbeispiel eines erfindungsgemäßen Anlassers:
- Fig. 2: einen Vertikalschnitt längs der Linie II-II in Fig.1; und
- Fig. 3: eine Schnittansicht analog Fig. 2 einer Schwungradvariante eines erfindungsgemäßen Anlassers.

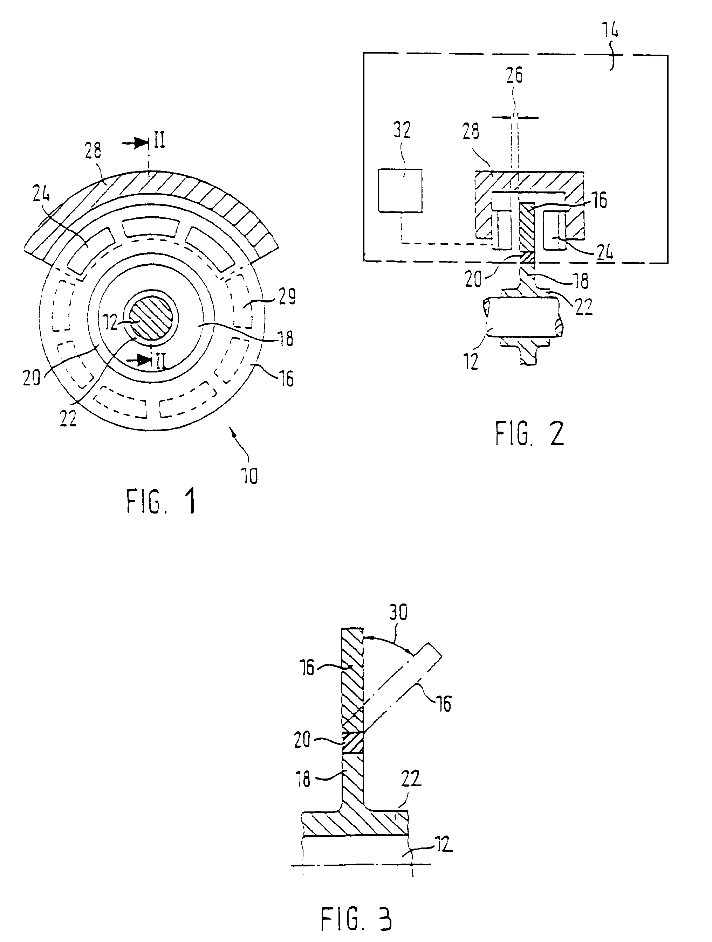

Fig. 1 und 2 zeigen einen Anlasser für ein (nicht dargestelletes) Antriebsaggregat. Die nachfolgende Beschreibung geht - lediglich aus Gründen einer einfacheren Darstellung - von einem Kraftfahrzeug-Verbrennungsmotor als Antriebsaggregat aus, ohne jedoch das Antriebaggregat darauf beschränken zu wollen.

Der Anlasser weist einen als scheibenförmiges Schwungrad 10 ausgebildeten Läufer eines Linearmotors 14 auf, der auf einer Antriebs-/Abtriebswelle des Verbrennungsmotor, hier der Kurbelwelle 12, sitzt und mit dem zum Anwerfen des Verbrennungsmotors erforderlichen Drehmoment beaufschlagt wird.

Der Läufer bzw. das Schwungrad 10 weist einen äußeren Schwungring 16 und einen hierzu konzentrischen inneren Schwungring 18 auf. Die beiden Schwungringe 16 und 18 sind über eine ringartige Gummischicht 20 elastisch miteinander verbunden. Der innere Schwungring 18 geht in eine Nabe 22 über, die fest auf der Kurbelwelle 12 sitzt. Auf diese Weise bildet der als Schwungrad 10 dienende Läufer einen an sich bekannten Drehschwingungstilger, der störende Drehungleichförmigkeiten der Kurbelwelle 12 passiv entgegenwirkt und somit unerwünschte Schwingungen des Kraftfahrzeuges und damit einhergehende Geräusche bereits in ihrem Ansatz effektiv mindert.

Zu beiden Seiten des äußeren Schwungringes 16 sind einander gegenüberliegend jeweils drei Ständerspulen 24 angeordnet. Dabei sind die Ständerspulen 24 innerhalb eines segmentartigen Winkelabschnittes des Schwungrades 10 gleichmäßig verteilt, haben einen geringen Abstand vom äußeren Schwungring 16 und bilden mit diesem Spalt 26. Der Spalt 26 ist so eng wie möglich zu wählen - etwa zwischen 0,1 und 1,5 mm.

Die Ständerspulen 24 werden von einem den Läufer bzw. das Schwungrad 10 jochartig übergreifenden stationären Haltebügel 28 getragen. Bevorzugt ist der Haltebügel 28 auf der Kurbelwelle 12 drehgelagert (in der Zeichnung nicht gezeigt), so daß die Ständerspulen 24 und der Läufer bei Erschütterungen des Kraftfahrzeuges gemeinsam schwingen, deren wechselseitige Ausrichtung und der Spalt 26 also im wesentlichen konstant bleiben.

Die Ständerspulen 24 werden in bekannter Weise über eine fest verlegte Stromzuführung (in der Zeichnung nicht gezeigt) mit gegeneinander phasenverschobenen Wechselströmen erregt und erzeugen hierdurch ein magnetisches Wanderfeld, welches über den Spalt 26 greift, den äußeren Schwungring 16 durchsetzt, ein darin in sich ringartig geschlossenes elektrisches Feld und somit dort eine Ringspannung induziert. Aufgrund dieser Spannung fließen im Schwungring 16 Ring- bzw. Wirbelströme, deren magnetische Felder - mit dem Wanderfeld der Ständerspulen 24 verkettet - eine Schubkraft in tangentialer Richtung auf das Schwungrad 10 ausüben. Diese resultiert in einem Drehmoment und somit einer Drehbewegung des als Schwungrad 10 fungierenden Läufers samt der Kurbelwelle 12, die schließlich den Motor anwirft.

Der äußere Schwungring 16 ist aus Stahl gefertigt und an seinen beiden, den Ständerspulen 24 zugekehrten Seitenflächen mit Kupferblech belegt. Hierdurch lassen sich hohe Wirbelströme in den Seitenflächen und entsprechend hohe Schubkräfte induzieren. Eine weitere Steigerung der Schubkraft läßt sich durch die auf den Läufer angeordneten mit einem Strom beaufschlagten Läuferspulen 29 (wie in Fig. 1 durch gestrichelte Linien angedeutet) erzielen. Dabei sind die Läuferspulen 29 derart angeordnet, daß deren Magnetfeld senkrecht zur Spaltebene steht und derart beaufschlagt, daß sich die Felder der Läuferspulen 29 und Ständerspulen 24 maximal verstärken. Das Feld der Läuferspulen 29 kann dabei ein Gleichfeld oder ein den Phasen des Feldes der Ständerpulen 24 angepaßtes Wechselfeld sein. Im letzgenannten Fall basiert die resultierende Drehbewegung des Läufers vor allem auf der "Mitnahme" des Feldes der Läuferspulen 29 durch das Wanderfeld der Ständerspulen 24.

Wie bereits ausgeführt, ist im vorliegenden Ausführungsbeispiel der als Schwungrad 10 dienende Läufer als Drehschwingungstilger ausgebildet, dessen ringartige Gummischicht 20 den inneren Schwungring 18 mit dem - etwaige Drehschwingungen tilgenden - äußeren Schwungring 16 elastisch verbindet. Hat die elastische Verbindung der beiden Schwungringe 16, 18 - wie im dargestellten Ausführungsbeispiel - elektrisch isolierende Eigenschaften, ergibt sich zusätzlich zur Schwingungsdämpfung auch noch ein elektrischer Vorteil: die im äußeren Schwungring 16 induzierten Ringströme können nicht in den inneren Schwungring 18 übertreten, konzentrieren sich also auf den drehmoment-günstigen Peripheriebereich des Läufers.

In Fig. 3 ist eine Variante des als Schwungrad 10 dienenden Läufers dargestellt. Danach ist der äußere Schwungring 16 des Schwungrades 10 gegenüber der Schwungradebene um einen Winkel 30 geneigt. Die übrigen Komponenten des Anlassers nach Fig. 1 und 2 sind dieser Orientierung entsprechend angeordnet. Auf diese Weise kann der Anlasser besonders einfach den Raumverhältnissen im Antriebsbereich des Kraftfahrzeuges baulich angepaßt werden - ohne dabei dessen Wirkungsgrad zu beeinträchtigen.

Gemäß Fig. 2 ist dem Anlasser eine schematisch dargestellte elektronische Schaltung 32 zugeordnet, die ihn in einem Kraftfahrzeug in zwei Betriebsarten betreibt: Bei Betätigen des Anlasserschlüssels arbeitet der Anlasser - hier der Linearmotor 14 - als Motor zum Anwerfen des Verbrennungsmotors; danach wird er in einen Generatorbetrieb umschaltet. Im letztgenannten Generatorbetrieb werden die Läuferspulen 29 über Schleifkontakte (hier nicht gezeigt) mit einem ein Magnetfeld erzeugenden Strom beaufschlagt. Aufgrund der Läuferbewegung bewegt sich dieses Feld relativ zur Spaltebene und induziert bzw. generiert in den Ständerspulen 24 eine Spannung, welche das Fahrzeuges im Fahrbetrieb mit elektrischer Energie versorgt.

Auf diese Weise übernimmt der Anlasser in einem Kraftfahrzeug auch die Funktion der nach dem Stand der Technik bekannten Lichtmaschine.

Zusammenfassend stellt die Erfindung einen Anlasser für Antriebsaggregate, insbesondere Verbrennungsmotoren zur Verfügung, der einen energiesparenden und verschleißarmen Startvorgang bei gleichzeitiger Kompensation von Störschwingungen im Antriebsstrang ermöglicht. Der Anlasser kann zudem so betrieben werden, daß er beim Starten als Motor und nach erfolgtem Start als Generator arbeitet.

## Patentansprüche

1. Anlasser für Antriebsaggregate, insbesondere Verbrennungsmotoren, mit einem Ständer (28) und einem - auf einer umlaufenden Welle (12) des Antriebsaggregates sitzenden - Läufer eines Elektromotors (14), wobei
- der Läufer zugleich als eine Schwungmasse (10) des Antriebsaggregates fungiert,
**dadurch gekennzeichnet, daß**
- der Läufer als passiver Drehschwingungstilger ausgebildet ist.

2. Anlasser nach Anspruch 1, **dadurch gekennzeichnet, daß** die Erregerspulen (24) auf dem Ständer (28) an zumindest einer Seite der Schwungmasse (10), insbesondere innerhalb bestimmter Winkelbereiche oder über den gesamten Umfang - gleichoder ungleichmäßig - verteilt, angeordnet sind.

3. Anlasser nach Anspruch 1 oder 2, **dadurch gekennzeichnet, daß** die Schwungmasse (10) mit einem Material hoher Leitfähigkeit beschichtet oder belegt ist oder kurzgeschlossene Läuferwicklungen in oder auf der Schwungmasse (10) angeordnet sind, derart, daß das in der leitenden Schicht oder den Läuferwicklungen induzierte Magnetfeld senkrecht auf einer Spaltebene steht.

4. Anlasser nach einem der Ansprüche 1 oder 2, **dadurch gekennzeichnet, daß** mit Strom beaufschlagte Läuferspulen (29) in oder auf der Schwungmasse (10) angeordnet sind, derart, daß deren Magnetfeld senkrecht auf der Spaltebene steht.

5. Anlasser nach einem der vorstehenden Ansprüche, **dadurch gekennzeichnet, daß** ein Radialschnitt der Schwungmasse (10) einen T-förmigen Querschnitt aufweist.

6. Anlasser nach Anspruch 1, **dadurch gekennzeichnet, daß** Erregerspulen in oder auf der Schwungmasse (10) und Material hoher Leitfähigkeit oder kurzgeschlossene Wicklungen auf dem Ständer (28) angeordnet sind, derart, daß die Funktionen von Läufer und Ständer (28) hinsichtlich der Erzeugung von Primär- und Sekundärfeld gegenüber einem der Ansprüche 2 bis 5 vertauscht sind.

7. Anlasser nach einem der vorstehenden Ansprüche, **gekennzeichnet durch** Schaltmittel (32), die derart ausgestaltet sind, daß sie den Elektromotor nach erfolgtem Start des Antriebsaggregates in einen Generatorbetrieb umschalten.

8. Anlassernach einem der vorstehenden Ansprüche, **dadurch gekennzeichnet, daß** die Schwungmasse (10) einen inneren Schwungring (18) und einen konzentrisch hierzu angeordneten äußeren Schwungring (16) aufweist und die Schwungringe (16, 18) drehelastisch, insbesondere über eine Gummischicht (20), miteinander verbunden sind.

9. Anlasser nach einem der vorstehenden Ansprüche, **dadurch gekennzeichnet, daß** die Schwungmasse (10) gegenüber ihrer Drehachse geneigt ist.

10. Anlasser nach Anspruch 8, **dadurch gekennzeichnet. daß** der äußere Schwungring (16) gegenüber dem inneren Schwungring (18) geneigt ist.

## Claims

1. A starter for drive assemblies, more particularly internal combustion engines, having a stator (28) and a rotor- seated on a rotating shaft (12) of the drive assembly - of an electric motor (14), wherein
- the rotor at the same time operates as a centrifugal mass (10) of the drive assembly,
**characterised in that**
- the rotor is constructed as a passive torsional vibration eradicator.

2. A starter according to Claim 1,
**characterised in that** the exciting coils (24) are disposed on the stator (28) at least on one side of the centrifugal mass (10), distributed - equally or unequally - in particular inside determined angular regions or over the entire periphery.

3. A starter according to Claim 1 or 2,
**characterised in that** the centrifugal mass (10) is coated or covered with a material of high conductivity or short-circuit rotor windings are disposed in or on the centrifugal mass (10) in such a manner that the magnetic field induced in the conductive layer or the rotor windings is perpendicular to a gap plane.

4. A starter according to one of Claims 1 or 2,
**characterised in that** rotor coils (29) supplied with current are disposed in or on the centrifugal mass (10) in such a matter that their magnetic field is perpendicular to the gap plane.

5. A starter according to one of the preceding Claims,
**characterised in that** a radial section of the centrifugal mass (10) has a T-shaped cross section.

6. A starter according to Claim 1,
**characterised in that** exciting coils are disposed in or one the centrifugal mass (10) and material of high conductivity or short-circuit windings are disposed on the stator (28) in such a manner that the functions of rotor and stator (20) are exchanged with respect to the production of the primary and secondary field in comparison with one of Claims 2 to 5.

7. A starter according to one of the preceding Claims,
**characterised by** switching means (32), which are constructed in such a manner that, after the start-up of the drive assembly, they switch the electric motor over to a generator operation.

8. A starter according to one of the preceding Claims,
**characterised in that** the centrifugal mass (10) comprises an inner rotating ring (18) and an outer rotating ring (16) disposed concentrically thereto and the rotating rings (16, 18) are connected in a torsionally elastic manner to one another, in particular via a rubber layer (20).

9. A starter according to one of the preceding Claims,
**characterised in that** the centrifugal mass (10) is inclined in relation to its axis of rotation.

10. A starter according to Claim 8,
**characterised in that** the outer rotating ring (16) is inclined in relation to the inner rotating ring (18).

## Revendications

1. Démarreur pour groupes d'entraînement, en particulier, moteurs à combustion interne, comportant un stator (28) et un rotor d'un moteur électrique (14) - ayant son assise sur un arbre rotatif (12) du groupe d'entraînement, dans lequel
- le rotor sert en même temps de volant (10) du groupe d'entraînement,
**caractérisé par le fait que**
- le rotor est conçu en tant qu'amortisseur passif des vibrations de rotation.

2. Démarreur selon la revendication 1, **caractérisé par le fait que** des bobines excitatrices (24) sont disposées sur le stator (28) au moins d'un côté du volant (10), en particulier à l'intérieur de secteurs circulaires déterminés ou bien sur toute la périphérie - régulièrement ou irrégulièrement -.

3. Démarreur selon la revendication 1 ou 2, **caractérisé par le fait que** le volant (10) est revêtu ou garni d'un matériau de haute conductibilité ou que des bobinages de rotor en court-circuit sont disposés dans ou sur le volant (10) de façon que le champ magnétique induit dans la couche conductrice ou dans les bobinages du rotor soit perpendiculaire à un plan d'entrefer.

4. Démarreur selon l'une des revendications 1 ou 2, **caractérisé par le fait que** des bobines de stator (29) dans lesquelles passe le courant sont disposées dans ou sur le volant (10) de façon que leur champ magnétique soit perpendiculaire au plan d'entrefer.

5. Démarreur selon l'une des revendications précédentes, **caractérisé par le fait qu'**une coupe radiale du volant (10) présente une section en forme de T.

6. Démarreur selon la revendication 1, **caractérisé par le fait que** des bobines excitatrices sont disposées dans ou sur le volant (10) et du matériau de haute conductibilité ou des bobinages en court-circuit le soient sur le stator (28) de façon que les fonctions de rotor et de stator (28) s'échangent, en ce qui concerne la production du champ primaire et du champ secondaire, par rapport à l'une des revendications 2 à 5.

7. Démarreur selon l'une des revendications précédentes, **caractérisé par** des moyens de commutation (32) qui sont réalisés de façon qu'après exécution du démarrage du groupe d'entraînement, ils commutent le moteur électrique en une génératrice.

8. Démarreur selon l'une des revendications précédentes, **caractérisé par le fait que** le volant (10) présente une couronne intérieure de volant (18) et une couronne extérieure de volant (16) qui lui est disposée concentriquement et que les couronnes de volant (16, 18) soient reliées l'une à l'autre avec une élasticité en rotation, en particulier par l'intermédiaire d'une couche de caoutchouc (20).

9. Démarreur selon l'une des revendications précédentes, **caractérisé par le fait que** le volant (10) est incliné par rapport à son axe de rotation.

10. Démarreur selon la revendication 8, **caractérisé par le fait que** la couronne extérieure de volant (16) est inclinée par rapport à la couronne intérieure de volant (18).
